# EUROPEAN PATENT SPECIFICATION

(11) **EP 2 212 874 B1**
(45) Date of publication and mention of the grant of the patent: **04.06.2014**
(21) Application number: 08837413.7
(22) Date of filing: 10.10.2008
(51) Int. Cl.: G08G 1/127, G01S 5/02, B60R 25/10

(54) **TRACKER AND LOCALIZER OF SEMI-TRAILERS**
TRACKER UND LOKALISIERER VON AUFLIEGERN
DISPOSITIF DE SUIVI ET DE LOCALISATION DE SEMI-REMORQUES

(30) Priority: 11.10.2007 BR PI0703612
(43) Date of publication of application: 04.08.2010
(73) Proprietor: Guerra, Marcos, Rio Grande do Sul (BR)
(72) Inventor: ESCOLA, Cristiano Branchieri, Caxias do Sul - Rio Grande do Sul 95034-300 (BR)
(74) Representative: Robba, Pierpaolo
(86) International application number: PCT/BR2008/000312
(87) International publication number: WO 2009/046512

(56) References cited:
- WO-A2-03/044630
- US-A- 5 999 091
- US-A1- 2002 177 476
- US-A1- 2002 177 476
- US-B1- 6 339 397

## Description

### Subject:

This Invention Patent refers to a system for tracking and localizing semi-trailers, comprising a device installed in a semi-trailer and a remote control station and also containing activators and sensors with remote communication, allowing the exact identification of the status of the semi-trailers, in real time, through communication lines via satellite and / or GPRS - General Packet Radio Service.

### Technical State of the Art and Issues:

The technical state of the art, reason for this invention, is known as tracking and localizing systems, with activators or not, specifically assigned to track the group tractor vehicle and semi-trailer, as all the equipment is conditioned to the presence of a traction vehicle or a "mechanical horse". It is not only the localization of the equipment installation, but the type of the installed information transmission system and its functionality.

When the tractor vehicle is removed, the semi-trailer is no longer tracked or localized.

Taking into consideration that a great part of the production in our country is transported by the road system, with a great number of robberies and load seizing, it is possible to understand the growing importance of tracking not only the tractor vehicle and the semi-trailer when it is moving or transporting but also tracking the semi-trailer, which is the element that contains the load that interests to the economy. The semi-trailer, in many cases, remains parked, for a determined period, in warehouses, federal locations or port yards, without the presence of the tractor vehicle. In this case, traditional models do not offer any further possibility to track the load, while the proposed model in this patent offers that possibility.

Another important point to be observed in traditional models is the absence of sensors for monitoring other important data, such as the tires pressure and the semi-towing vehicle occupancy. That possibility is contemplated in the object presented in this patent.

US 5,999,091 discloses a trailer communication system comprising a tag unit for location on a trailer and a remote unit which communicates with the tag unit; the tag unit comprises a processor and is associated to pressure sensor, temperature sensor and door sensor; the processor does not generate data for an electric door blocking device, or a brake blocking means.

US 2002/0177476 discloses a tracking device which uses a motion sensor associated to a GPS unit to provide reliable position estimation; the device is capable of tracking vehicles having a battery and incorporates a battery level sensor.

WO 03/044630 discloses a vehicle security system capable of detecting conditions of unauthorized usage of a vehicle; the vehicle is disabled if an unauthorized driver is detected.

### Inventive Concept:

This System for Tracking and Localizing Semi-trailers is based in the inventive concept of using components know and used in the market, containing a different installation and operation system, in order to obtain a tracker and localizer with the possibility of efficient and accessible events control and status verification, promoting a functional and manufacturing improvement relatively to the object technical state of the art. It is being developed starting from difficulties currently found in traditional models.

An item that deserves to be pointed out is the monitoring junction of several elements into a single system, such as monitoring of localization tracking, temperature, tires pressure, occupancy, doors activities and openings.

### Application Field:

The application of this system for tracking and localizing Semi-trailers appears in the use of this for tracking, localizing and activating systems that impede doors opening of the semi-trailers, and is used, therefore, as a ***vehicle accessory.***

### Advantages:

The system for tracking and localizing Semi-trailers presents the following advantages:
- Possibility of tracking and localizing of the semi-trailer separately from the tractor vehicle;
- Possibility of monitoring doors, permitting to know if and when doors are being opened or closed, and also monitoring of the semi-trailer displacement;
- Activation possibility of the semi-trailer devices in order to impede doors opening without authorization - blocking - and activation of brake systems to avoid its displacement;
- Possibility to monitor tires pressure and the occupancy of the semi-trailer, permitting to verify if the towing unit remains loaded or not;
- Possibility of monitoring data such as temperature. This is an important difference in transporting food, flowers and similar products;
- It has operation autonomy for several days in situations when the semi-trailer is uncoupled from the tractor vehicle;
- Operation ease and practicality, as the battery is automatically reloaded when the coupling to the tractor vehicle occurs, or through connection to the electrical network or also through a photovoltaic panel;
- Offers more safety to transportation, as it allows constant tracking of the semi-trailer and the load, regardless of the vehicle being in movement or parked.

### Illustrations:

With the objective to ease the investigation and to allow the understanding of this patent, as explained in the report, according to a basic and preferred action manner elaborated by the requester, references are made to the attached illustrations, which are part and subsidize this descriptive report, where the following:

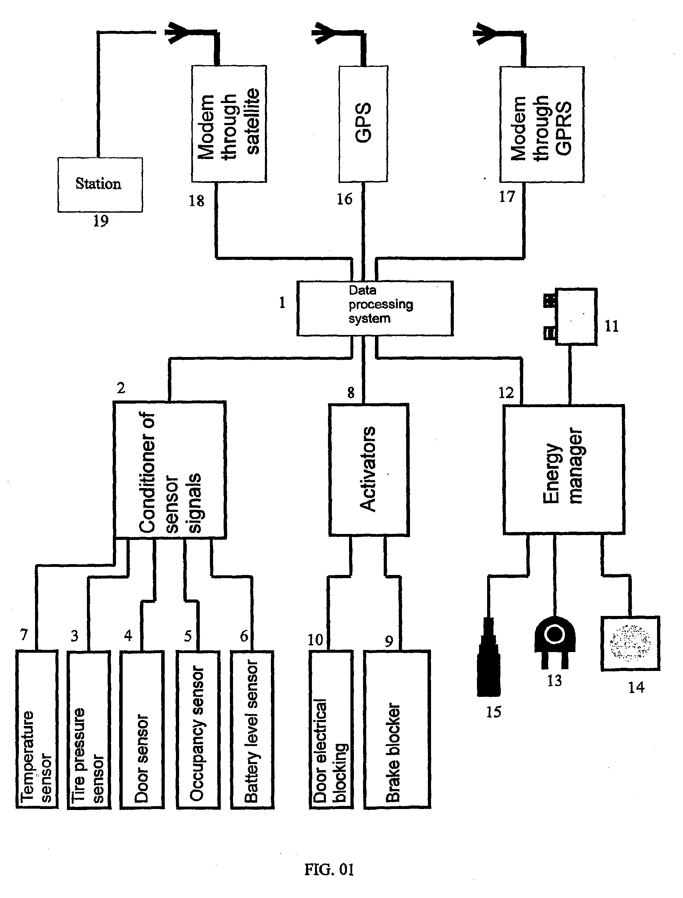

FIG. 01 - presents a system flowchart; and

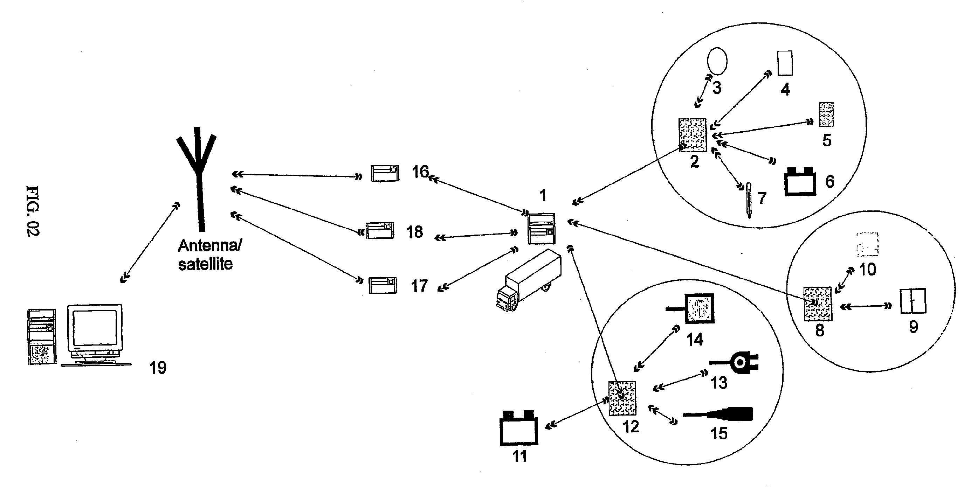

FIG. 02 - presents a figurative scheme of the system operation.

### Description:

The system for tracking and localizing Semi-Trailers is composed of a data processing center 1 installed inside the semi-trailer in a place where some protection can be obtained. By the data processing center 1 a signal conditioner for sensors is positioned 2 directly connected to the tire pressure sensors 3, the door sensors 4, the semi-trailer occupancy sensors 5, the battery level sensor 6 and the temperature sensor 7. The signal conditioner for sensors 2 is comprised of specific electronic circuits that contain printed-circuit boards and electro-electronic components with the function to inform to the data processing center 1 at specifically requested times or periodically, the sensors situation.

The tire pressure sensors 3 permit to monitor the air pressure of the pneumatic circuits of the semi-trailer, as well as several tires existing in it.

The door sensors 4 determine when the doors are opened or closed. The semi-trailer occupancy sensors 5 permit to monitor if the semi-trailer is loaded or not, by means of an ultrasonic sensor.

Also by the data processing center 1 there is an amplifier for activators 8 responsible for managing information to activate the impediment of doors opening without authorization, or, in other words, the electrical blocking of the doors 10 and/or activate the brake system blocking scheme 9 impeding movement without authorization.

The system operation autonomy is guaranteed by the presence of the energy manager 12 placed by the electrical battery 11, also connected to the data processing center 1. The energy manager 12 permits the reading of information generated by the battery level sensor 6 relative to electrical voltage and current, giving origin to the process of its reloading, and promoting the whole system continuous operation.

The electrical battery reloading 11 may be carried out through connection to the tractor vehicle using the specific cable 15, through connection to the electrical network using the bi-volt cable 13 or through photovoltaic panel 14. According to the possibilities of each moment, the battery reloading may be carried out by any of these three alternatives.

All information related to sensors, activators or the energy manager are processed at the data processing center 1 and transmitted to a remote control station 19 by means of a modem for satellite 18 or by means of a GPRS modem 17. The modem for satellite 18 promotes data transmission through a constellation of satellites adequate for this type of product, and the GPRS modem 17 permits data transmission through a mobile telephone network. The GPS unit 16 permits tuning to GPS satellite signals (Global Positioning System) in order to register the geographical location of the semi-trailer, its time and speed.

### Operation:

This patent is put in place in the following manner: Information on geographical position obtained by the GPS unit and the situation of several installed sensors are transmitted through modem for satellite and/or GPRS modem to a remote control station. This information may be sent periodically, following previously established schedules, or upon specific request from the remote control station.

According to the contents of information received by the remote control station, this may also send through a modem for satellite and/or a GPRS modem the command for activation of the devices for doors or brakes electrical blocking.

When the sensors capture any alteration relatively to the established standards, such as, for example, the doors opening without authorization, this information is immediately transmitted to the remote control station, which takes the particularly most appropriate decision for the event.

## Claims

1. A system for tracking and localizing semi-trailers, comprising a device installed in a semi-trailer and a remote control station (19), the device in the semi-trailer comprising:
- a CPU (1) managing data originating from:
- a GPS unit (16) delivering position, time and speed of the semi-trailer;
- tire pressure sensors (3);
- door sensors (4);
- trailer-occupancy sensors (5);
- battery level sensor (6);
- a temperature sensor (7);
- an energy manager signaling the need for battery reloading;
wherein the CPU comprises means for sending information related to said sensors, the energy manager and the GPS unit to the remote control station either periodically, following previously established schedules, or upon specific request from the remote control station (19); the CPU being connected to activators (8) responsible to activate an electric door blocking device (10) or a brake blocking device (9);
the remote control station (19) having means for sending commands for activation of the devices for electric door blocking or electric brake blocking according to the content of the received information.

2. A system for tracking and localizing semi-trailers, as claimed in claim 1, **characterized by** the fact that it comprises a sensors conditioner (2) which monitors the sensors (3,4,5,6,7).

3. A system for tracking and localizing semi-trailers, as claimed in claim 1, **characterized by** the fact that it comprises actuator amplifiers (8) that causes the activation of the electric door blocking device (10) which is capable of impeding the doors to be opened without authorization and the second device and brakes blocking device (9) which is capable of impeding the semi-trailer to be displaced.

4. A system for tracking and localizing semi-trailers, as claimed in claim 1, **characterized by** the fact that it comprises an energy manager (12) which carries out the reading of the battery level sensor information (6) on the current load of the electrical battery (11), communicates that information to the CPU (1) and signals the need for reloading the electrical battery (11).

5. A system for tracking and localizing semi-trailers, as claimed in claim 1, **characterized by** the fact that the information captured at the processing center (1) is sent to the remote control station (19) by means of a modem for satellites (18).

6. A system for tracking and localizing semi-trailers, as claimed in claim 1, **characterized by** the fact that the information captured at the processing center (1) is sent to the remote control station (19) by means of a mobile telephone network and a GPRS modem (17).

7. A system for tracking and localizing semi-trailers, as claimed in claim 1. **characterized by** the fact that the electrical battery (11) is reloaded when it is connected to the tractor vehicle using a specific cable (15).

8. A system for tracking and localizing semi-trailers, as claimed in claim 1, **characterized by** the fact that the electrical battery (11) is reloaded through a connection to the electrical network using a bi-volt cable (13).

9. A system for tracking and localizing semi-trailers, as claimed in claim 1, **characterized by** the fact that the electrical battery (11) is reloaded through a photovoltaic panel (14).

10. Method for tracking and localizing semi-trailers, with a system comprising a device installed in a semi-trailer and a remote control station (19), comprising the steps of:
installing in a semi-trailer the device comprising a CPU (1) managing data originating from:
- a GPS unit (16) delivering position, time and speed of the semi-trailer;
- tire pressure sensors (3);
- door sensors (4);
- trailer-occupancy sensors (5);
- battery level sensor (6);
- a temperature sensor (7);
- an energy manager signaling the need for battery reloading;
wherein the CPU comprises means for sending information related to said sensors, the energy manager and the GPS unit to the remote control station either periodically, following previously established schedules, or upon specific request from the remote control station (19); the CPU being connected to activators (8) responsible to activatean electric door blocking device (10) or a brake blocking device (9);
the remote control station (19) having means for sending commands for activation of the devices for electric door blocking or electric brake blocking according to the contents of the received information .

## Patentansprüche

1. Anordnung zum Tracken und Lokalisieren von Aufliegern, umfassend eine in einem Auflieger angebrachte Vorrichtung sowie eine Fernsteuerstation (19), wobei die Vorrichtung im Auflieger umfasst:
- eine CPU (1) zum Management von Daten stammend von:
- einer GPS-Einheit (16), die Stellung, Zeit und Geschwindigkeit des Aufliegers liefert;
- Reifendrucksensoren (3)
- Türsensoren (4)
- Sensoren der Personenbelegung des Aufliegers (5)
- Sensor des Batteriestandes (6)
- einem Temperatursensor (7)
- einem Energiemanager, der die Notwendigkeit für Batterienachladung signalisiert;
wobei die CPU Mittel umfasst zum Senden von auf die genannten Sensoren, den Energiemanager und die GPS-Einheit bezogenen Informationen an die Fernsteuerstation, entweder periodisch gemäß voreingestellten Zeitplänen oder bei spezieller Anfrage der Fernsteuerstation (19); wobei die CPU an Betätigungsvorrichtungen (8) angeschlossen ist, die zur Betätigung einer elektrischen Türblockiervorrichtung (10) oder einer Brems-Blockiervorrichtung (9) angeordnet sind; wobei die Fernsteuerstation (19) Mittel aufweist zum Senden von Befehlen zum Betätigen der elektrischen Türblockiervorrichtung oder der Brems-Blockiervorrichtung in Abhängigkeit von dem Inhalt der empfangenen Informationen.

2. Anordnung zum Tracken und Lokalisieren von Aufliegern nach Anspruch 1, **dadurch gekennzeichnet, dass** sie einen Sensorkonditionierer (2) umfasst, der die Sensoren (3,4,5,6,7) überwacht.

3. Anordnung zum Tracken und Lokalisieren von Aufliegern nach Anspruch 1, **dadurch gekennzeichnet, dass** sie Betätigungsverstärker (8) umfasst, die die Betätigung der elektrischen Türblockiervorrichtung (10), die ein genehmigungsloses Öffnen der Türen verhindern kann, sowie die Betätigung der zweiten Vorrichtung und der Brems-Blockiervorrichtung (9), die die Bewegung des Aufliegers verhindern kann, bewirken.

4. Anordnung zum Tracken und Lokalisieren von Aufliegern nach Anspruch 1, **dadurch gekennzeichnet, dass** sie einen Energiemanager (12) umfasst, der die Informationen des Sensors des Batteriestandes (6) bezüglich der Strombelastung der elektrischen Batterie (11) ausliest, diese Informationen an die CPU (1) überträgt und die die Notwendigkeit für die Nachladung der elektrischen Batterie (11) signalisiert.

5. Anordnung zum Tracken und Lokalisieren von Aufliegern nach Anspruch 1, **dadurch gekennzeichnet, dass** die an der CPU (1) erfassten Informationen mittels eines Satelliten-Modems (18) an die Femsteuerstation (19) gesendet werden.

6. Anordnung zum Tracken und Lokalisieren von Aufliegern nach Anspruch 1, **dadurch gekennzeichnet, dass** die an der CPU (1) erfassten Informationen mittels eines Mobilfunknetzes und eines GPRS-Modems (17) an die Femsteuerstation (19) gesendet werden.

7. Anordnung zum Tracken und Lokalisieren von Aufliegern nach Anspruch 1, **dadurch gekennzeichnet, dass** die elektrische Batterie (11) nachgeladen wird, wenn sie an das ziehende Fahrzeug unter Verwendung eines spezifischen Kabels (15) angeschlossen wird.

8. Anordnung zum Tracken und Lokalisieren von Aufliegern nach Anspruch 1, **dadurch gekennzeichnet, dass** die elektrische Batterie (11) über einen Anschluss an das elektrische Netz unter Verwendung eines Doppelspannungskabels (13) nachgeladen wird.

9. Anordnung zum Tracken und Lokalisieren von Aufliegern nach Anspruch 1, **dadurch gekennzeichnet, dass** die elektrische Batterie (11) über ein Photovoltaik-Panel nachgeladen wird.

10. Verfahren zum Tracken und Lokalisieren von Aufliegern, mit einer Anordnung, die eine in einem Auflieger angebrachte Vorrichtung sowie eine Femsteuerstation (19) umfasst, umfassend die folgenden Schritten:
Montage, in einem Auflieger, der Vorrichtung, die eine CPU (1) umfasst zum Management von Daten stammend von:
- eine GPS-Einheit (16), die Stellung, Zeit und Geschwindigkeit des Aufliegers liefert;
- Reifendrucksensoren (3)
- Türsensoren (4)
- Sensoren der Personenbelegung des Aufliegers (5)
- Sensor des Batteriestandes (6)
- einem Temperatursensor (7)
- einem Energiemanager, der die Notwendigkeit für Batterienachladung signalisiert;
wobei die CPU Mittel umfasst zum Senden von auf die genannten Sensoren, den Energiemanager und die GPS-Einheit bezogenen Informationen an die Femsteuerstation, entweder periodisch gemäß voreingestellten Zeitplänen oder bei spezieller Anfrage der Femsteuerstation (19); wobei die CPU an Betätigungsvorrichtungen (8) angeschlossen ist, die zur Betätigung einer elektrischen Türblockiervorrichtung (10) oder einer Brems-Blockiervorrichtung (9) angeordnet sind;
wobei die Femsteuerstation (19) Mittel aufweist zum Senden von Befehlen zum Betätigen der elektrischen Türblockiervorrichtung oder der Brems-Blockiervorrichtung in Abhängigkeit von dem Inhalt der empfangenen Informationen.

## Revendications

1. Système de suivi et de localisation de semi-remorques, comportant un dispositif installé à l'intérieur d'un semi-remorque ainsi qu'un poste de commande à distance (19), le dispositif à l'intérieur du semi-remorque comprenant:
- une unité centrale de traitement de données (1) gérant les données provenant de:
- une unité GPS (16) fournissant position, temps et vitesse du semi-remorque;
- capteurs de pression des pneumatiques (3);
- capteurs des portes (4);
- capteurs de présence dans le remorque (5):
- capteur de niveau de batterie (6);
- un capteur de température (7);
- un dispositif de gestion d'énergie indiquant la nécessité de recharger la batterie;
dans lequel l'unité centrale de traitement de données comporte des moyens pour envoyer au poste de commande à distance les informations relatives à ces capteurs, au dispositif de gestion d'énergie et à l'unité GPS, soit périodiquement, suivant des échéanciers préalablement fixés, soit à la suite d'une requête spécifique provenant du poste de commande à distance (19); l'unité centrale de traitement de données étant également connectée à des actionneurs (8) responsables pour l'activation d'un dispositif de blocage de portes électriques (10) ou d'un dispositif de blocage de freins (9); le poste de commande à distance (19) ayant des moyens pour envoyer des commandes pour l'activation des dispositifs pour le blocage de portes électriques ou pour le blocage de freins électriques en fonction du contenu des informations reçues.

2. Système de suivi et de localisation de semi-remorques selon la revendication 1, **caractérisé en ce qu'**il comprend un conditionneur des capteurs (2) qui surveille les capteurs (3,4,5,6,7).

3. Système de suivi et de localisation de semi-remorques selon la revendication 1, **caractérisé en ce qu'**il comprend des amplificateurs d'actuation (8) qui provoquent l'activation du dispositif de blocage de portes électriques (10), qui peut empêcher l'ouverture des portes en absence d'autorisation et du deuxième dispositif et du dispositif de blocage de freins (9) qui peut empêcher que le semi-remorque soit déplacé.

4. Système de suivi et de localisation de semi-remorques selon la revendication 1, **caractérisé en ce qu'**il comprend un dispositif de gestion d'énergie (12) qui effectue la lecture de l'information du capteur de niveau de batterie (6) concernant la charge actuelle de la batterie électrique (11), communique cette information à l'unité centrale de traitement de données (1) et signale la nécessité de recharger la batterie électrique (11).

5. Système de suivi et de localisation de semi-remorques selon la revendication 1, **caractérisé en ce que** les informations saisies en correspondance de l'unité centrale de traitement de données (1) sont envoyées au poste de commande à distance (19) par un modem satellitaire (18).

6. Système de suivi et de localisation de semi-remorques selon la revendication 1, **caractérisé en ce que** les informations saisies en correspondance de l'unité centrale de traitement de données (1) sont envoyées au poste de commande à distance (19) par un réseau de téléphonie mobile et un modem GPRS (17).

7. Système de suivi et de localisation de semi-remorques selon la revendication 1, **caractérisé en ce que** la batterie électrique (11) est rechargée lorsqu'elle est connectée au véhicule tracteur en utilisant un câble spécifique (15).

8. Système de suivi et de localisation de semi-remorques selon la revendication 1, **caractérisé en ce que** la batterie électrique (11) est rechargée par une connexion au réseau électrique en utilisant un câble "bi-tension" (13).

9. Système de suivi et de localisation de semi-remorques selon la revendication 1, **caractérisé en ce que** la batterie électrique (11) est rechargée par un panneau photovoltaïque.

10. Méthode de suivi et de localisation de semi-remorques, en utilisant un système comportant un dispositif installé à l'intérieur d'un semi-remorque ainsi qu'un poste de commande à distance (19), comportant les étapes de:
installer à l'intérieur d'un semi-remorque le dispositif comprenant une unité centrale de traitement de données (1) gérant les données provenant de:
- une unité GPS (16) fournissant position, temps et vitesse du semi-remorque;
- capteurs de pression des pneumatiques (3);
- capteurs des portes (4);
- capteurs de présence dans le remorque (5):
- capteur de niveau de batterie (6);
- un capteur de température (7);
- un dispositif de gestion d'énergie indiquant la nécessité de recharger la batterie;
dans lequel l'unité centrale de traitement de données comporte des moyens pour envoyer au poste de commande à distance les informations relatives à ces capteurs, au dispositif de gestion d'énergie et à l'unité GPS, soit périodiquement, suivant des échéanciers préalablement fixés, soit à la suite d'un requête spécifique provenant du poste de commande à distance (19); l'unité centrale de traitement de données étant également connectée à des actionneurs (8) responsables de l'activation d'un dispositif de blocage de portes électriques (10) ou d'un dispositif de blocage de freins (9); le poste de commande à distance (19) ayant des moyens pour envoyer des commandes pour l'activation des dispositifs pour le blocage de portes électriques ou pour le blocage de freins électriques en fonction du contenu des informations reçues.
